# FASCICULE DE BREVET EUROPEEN

(11) **EP 3 137 774 B1**
(45) Date de publication et mention de la délivrance du brevet: **04.05.2022**
(21) Numéro de dépôt: 15715350.3
(22) Date de dépôt: 19.03.2015
(51) Int. Cl.: F04D 25/08, F04D 29/66, H02K 9/06, F04D 29/32

(54) **VENTILATEUR POUR MACHINE ELECTRIQUE TOURNANTE DE VEHICULE AUTOMOBILE**
LÜFTER FÜR EINE ELEKTRISCHE DREHMASCHINE EINES KRAFTFAHRZEUGS
FAN FOR A MOTOR VEHICLE ROTARY ELECTRIC MACHINE

(30) Priorité: 29.04.2014 FR 1453847
(43) Date de publication de la demande: 08.03.2017
(73) Titulaire: PSA Automobiles SA, 78300 Poissy (FR)
(72) Inventeur: BALENGHIEN, Olivier, F-93340 Le Raincy (FR); BLEINHANT, Sebastien, F-78400 Chatou (FR); AUBOIS, Valerie, F-93700 Drancy (FR)
(86) Numéro de dépôt international: PCT/FR2015/050679
(87) Numéro de publication internationale: WO 2015/166150

(56) Documents cités:
- EP-A2- 1 555 440
- DE-A1- 10 238 934
- FR-A1- 2 908 941
- GB-A- 2 220 705
- JP-A- 2009 162 086
- US-A- 4 253 800
- US-A- 6 139 275

## Description

La présente invention concerne un ventilateur pour machine électrique tournante, notamment pour alternateur ou alterno-démarreur, pouvant être installé dans un véhicule automobile. L'invention concerne également un procédé de fabrication d'un tel ventilateur, ainsi qu'une machine électrique tournante comprenant un tel ventilateur. L'invention concerne aussi un véhicule automobile équipé d'une machine électrique tournante comprenant le ventilateur.

Les alternateurs sont connus dans le domaine automobile et, dans un véhicule, servent à produire de l'électricité en utilisant l'énergie mécanique fournie par le moteur thermique pendant les phases de fonctionnement de celui-ci. Ils sont en général équipés d'un ventilateur pour leur refroidissement. Les alterno-démarreurs, qui combinent la fonction d'alternateur et la fonction de démarreur, sont également connus, et ils sont de plus en plus utilisés, toujours dans le domaine automobile, notamment dans la filière des véhicules hybrides. Les alterno-démarreurs sont également, en général, équipés d'un ventilateur pour leur refroidissement.

Les ventilateurs d'alternateurs et d'alterno-démarreurs sont susceptibles de produire un bruit aéraulique, qualifié de sirène. Ce bruit émerge, dans un véhicule automobile, du bruit de l'ensemble du véhicule, qui est normalement dominé par le bruit du moteur thermique.

Pour rendre plus discret le bruit ainsi produit par les ventilateurs des alternateurs et alterno-démarreurs de véhicules automobiles, il est possible de dimensionner les ailettes du ventilateur pour répondre à une exigence en matière de niveau de bruit d'ensemble. Mais cette approche impose des contraintes très fortes quant aux caractéristiques du ventilateur, ce qui, au final, limite les performances de refroidissement de la machine tournante par le ventilateur et, par conséquent, la performance de l'alternateur ou de l'alterno-démarreur.

Il est connu du document EP 1 555 440 un rotor comportant des ailettes sur sa circonférence, deux ailettes successives étant séparées par une distance circonférentielle, qui prend l'une ou l'autre de deux valeurs, la séquence des deux valeurs correspondant à une « séquence binaire pseudo-statistique ». Le bruit caractéristique du dispositif est indiqué être atténué.

Cette divulgation ne donne pas une répartition détaillée des ailettes autour du rotor. Il est notamment prévu que la séquence binaire pseudo-statistique soit appliquée seulement à un groupe d'ailettes parmi l'ensemble des ailettes du rotor.

Les enseignements de l'art antérieur en matière de répartition des ailettes d'un ventilateur ne sont pas efficaces pour atténuer l'harmonique de la fréquence de rotation principalement incriminée dans le bruit aéraulique. Cette harmonique est directement liée au nombre d'ailettes du ventilateur, et pour un ventilateur à onze ailettes, elle est notée H11.

La présente invention a ainsi notamment pour objet d'atténuer au mieux l'harmonique principalement incriminée dans le bruit aéraulique d'un ventilateur, qui est liée à son nombre d'ailettes, et d'éviter l'émergence d'autres fréquences sonores liées aux pales du ventilateur.

A cet effet, il est proposé un ventilateur pour machine électrique tournante de véhicule automobile, comprenant une succession d'ailettes réparties autour d'un axe de rotation, chacune desdites ailettes étant disposée angulairement autour dudit axe, par rapport à une position qui serait la sienne si toutes les ailettes étaient disposées de manière équidistante, avec un décalage angulaire respectif, le décalage angulaire étant pris, pour les ailettes successives, suivant une séquence binaire pseudo-aléatoire, parmi deux valeurs prédéfinies pour le ventilateur, caractérisé en ce que la séquence binaire pseudo-aléatoire est générée à partir d'une séquence binaire initiale et d'une combinaison logique utilisant un opérateur « OU exclusif » de paquet de deux éléments binaires successifs de ladite séquence, la différence entre les deux valeurs de décalage angulaire étant d'au moins 4° et les ailettes étant au nombre de 11.

Grâce à la disposition ainsi proposée, la succession des ailettes présente un caractère aléatoire, par un phénomène similaire à un brouillage par la méthode mathématique dite méthode dite « additive scrambler »en terminologie anglaise. Ainsi, l'harmonique liée au nombre d'ailettes est fortement, si ce n'est totalement, effacée, et aucun autre pic de volume sonore n'est créé à une autre fréquence particulière. On étale par conséquent le volume sonore lié à la rotation du ventilateur, on évite l'émergence d'un bruit caractéristique, et on conserve, pour l'ensemble du véhicule, le bruit global essentiellement constitué du bruit du moteur thermique. Il est alors possible de ne pas contraindre excessivement la conception du ventilateur pour des raisons acoustiques, et de dimensionner celui-ci pour assurer une performance de refroidissement élevée, pour un fonctionnement optimal de la machine électrique tournante.

Avantageusement, le premier paquet de deux éléments binaires successifs sont les deux premiers éléments binaires successifs de la séquence initiale, et chaque paquet suivant étant les deux éléments binaires successifs suivants le premier des deux éléments binaires successifs du précédent paquet.

Avantageusement, la séquence binaire pseudo-aléatoire a une longueur de génération adaptée, en fonction du nombre d'ailettes du ventilateur, pour minimiser les répétitions de motifs dans la succession d'écarts angulaires entre ailettes.

Avantageusement, la longueur de génération en fonction du nombre d'ailettes, Nₐᵢₗₑₜₜₑₛ, est de 2ⁿ éléments binaires, avec n≥1, tel que 2⁽ⁿ⁻¹⁾ < Nₐᵢₗₑₜₜₑₛ ≤ 2ⁿ .

Avantageusement, la séquence binaire initiale est constituée de n éléments binaires.

Avantageusement, la séquence binaire initiale est constituée d'un premier élément binaire à un état binaire, a, suivi de n-1 éléments binaires à l'autre état binaire, b.

L'invention a également pour objet une machine électrique tournante pour véhicule automobile, comprenant un ventilateur selon l'une des variantes précédemment décrites.

Avantageusement, la machine électrique tournante est un alternateur ou un alterno-démarreur.

L'invention a également pour objet un véhicule automobile, comprenant une machine électrique tournante de l'invention.

L'invention a également pour objet une méthode de fabrication d'un ventilateur pour machine électrique tournante pour véhicule automobile, comprenant le positionnement d'une succession d'ailettes réparties autour d'un axe de rotation, en disposant chacune desdites ailettes angulairement autour dudit axe, par rapport à une position qui serait la sienne si toutes les ailettes étaient disposées de manière équidistante, avec un décalage angulaire respectif, le décalage angulaire étant pris, pour les ailettes successives, parmi deux valeurs prédéfinies pour le ventilateur suivant une séquence binaire pseudo-aléatoire, caractérisé en ce que la séquence binaire pseudo-aléatoire est générée à partir d'une séquence binaire initiale et d'une combinaison logique utilisant un opérateur « OU exclusif » de paquet de deux éléments binaires successifs de ladite séquence, la différence entre les deux valeurs de décalage angulaire (α ; β) étant d'au moins 4° et les ailettes (601-611) étant au nombre de 11.

D'autres buts, caractéristiques et avantages de l'invention apparaitront au cours de la description suivante d'un mode de réalisation de l'invention, donné à titre d'exemple non limitatif et illustré par les dessins joints, également donnés à titre d'exemple non limitatif et sur lesquels :
- la figure 1 est une vue schématique d'un type d'alternateur;
- la figure 2 est une vue schématique d'un autre type d'alternateur ;
- la figure 3 est une vue de face d'un ventilateur d'alternateur ;
- la figure 4 est un schéma représentant le positionnement des ailettes d'un ventilateur n'incorporant pas l'invention ;
- la figure 5 est un schéma représentant le positionnement des ailettes d'un ventilateur selon l'invention, par rapport au ventilateur de la figure 4, et
- la figure 6 est un schéma du positionnement des ailettes d'un ventilateur selon l'invention.
- la figure 7 est un schéma de véhicule automobile comprenant une machine électrique tournante selon l'invention.

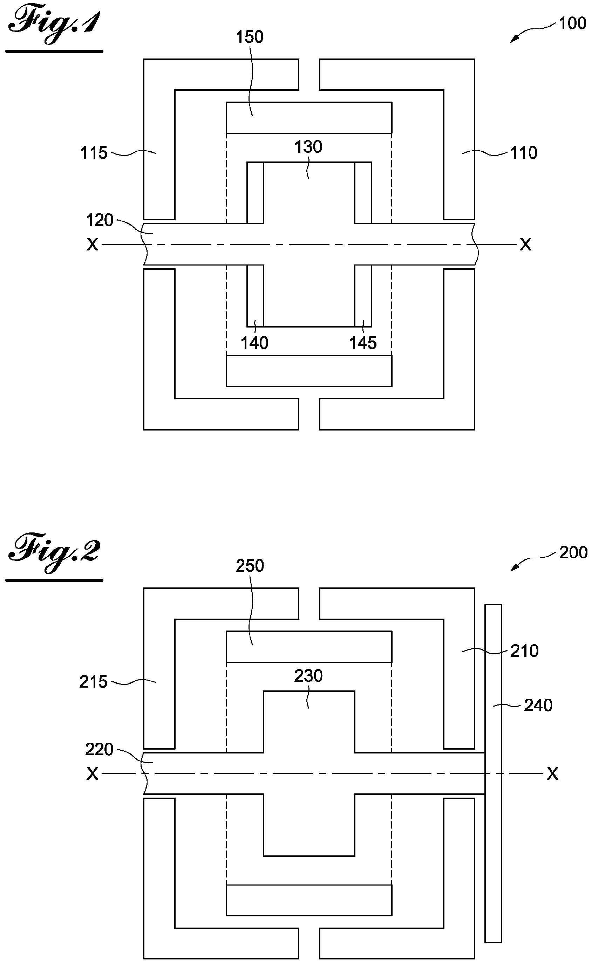

On a représenté sur la figure 1 un alternateur 100 pour véhicule automobile.

Il comporte une carcasse composée par l'assemblage de deux flasques 110 et 115. L'axe d'un rotor 120, en rotation autour d'un axe X-X est articulé en rotation vis à vis des flasques 110 et 115, par l'intermédiaire de paliers (non représentés).

A l'intérieur de la carcasse, un stator 150 entoure l'âme 130 du rotor 120. L'alternateur peut comporter également un collecteur, un pont de diode redresseur, un porte-balai régulateur et un capot (non représentés).

L'alternateur 100 transforme de l'énergie mécanique en énergie électrique, mais peut aussi, dans certains modes de réalisation, transformer de l'énergie électrique en énergie mécanique. Dans ce cas, l'alternateur 100 est, comme on l'a vu précédemment, qualifié d'alterno-démarreur. Il peut alors servir pour démarrer le moteur thermique d'un véhicule, par exemple un véhicule automobile.

Dans le mode de réalisation de la figure, l'âme 130 du rotor 120 porte sur chacun de ses flancs une série d'ailettes radiales réparties autour de l'axe XX. Ces deux séries d'ailettes sont repérées sur la figure par les références 140 et 145. Elles sont entraînées toutes les deux en rotation avec l'âme 130 du rotor 120, quand l'alternateur 100 est en fonctionnement. Ces ensembles d'ailettes assurent la fonction de refroidissement de l'alternateur 100 et constituent donc des ventilateurs.

En figure 2, on a représenté un deuxième type d'alternateur pouvant incorporer l'invention. Les références des éléments se retrouvant dans le mode de réalisation de la figure 2 de la même manière que dans le mode de réalisation de la figure 1 sont simplement incrémentées de la valeur 100, pour faciliter la lecture. Contrairement au mode de réalisation de la figure 1, l'âme 230 du rotor 220 ne porte pas sur ses flancs d'ailettes de ventilation. Par contre, la fonction de ventilation est assurée par une série d'ailettes disposées radialement autour de l'axe XX à l'extérieur des flasques 210 et 215. Cette série d'ailettes constitue un ventilateur référencé 240. Le ventilateur 240 est à nouveau entraîné en rotation par le rotor 220.

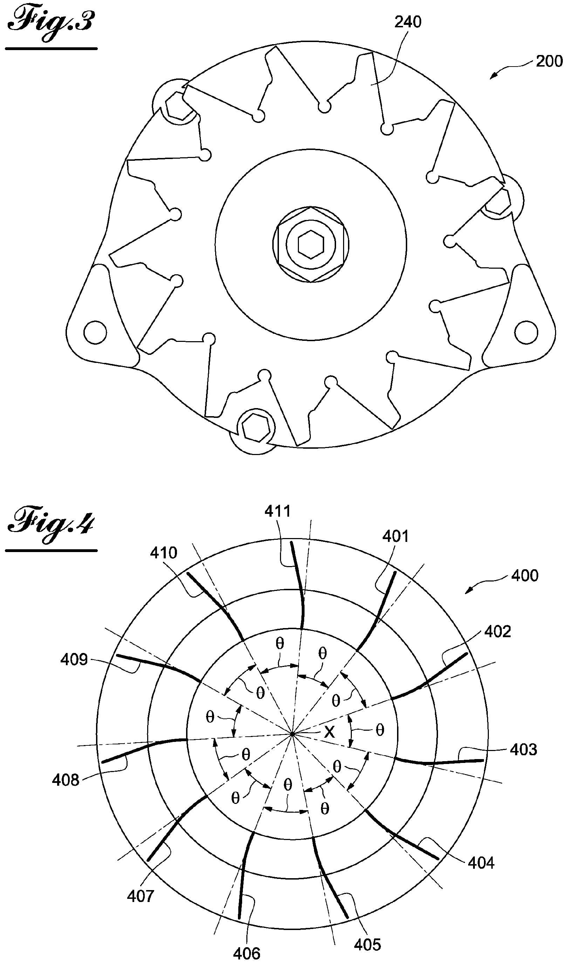

Les ailettes du ventilateur peuvent prendre différentes formes. En figure 3, on a représenté, vue de face, l'alternateur 200 et son ventilateur 240, qui est ici en tôle emboutie. Le modèle représenté a treize ailettes. Celles-ci présentent un coude sur l'une de leurs faces, mais d'autres géométries d'ailettes peuvent être envisagées.

En figure 4, on a représenté schématiquement un ventilateur 400 selon l'art antérieur. Le modèle représenté est un ventilateur à onze ailettes. Les ailettes 401 à 411 sont toutes disposées selon une répartition régulière autour de l'axe du ventilateur (répartition équidistante). Ainsi, l'angle entre deux ailettes est constant et est égal à la valeur θ = 360/11 = 33°.

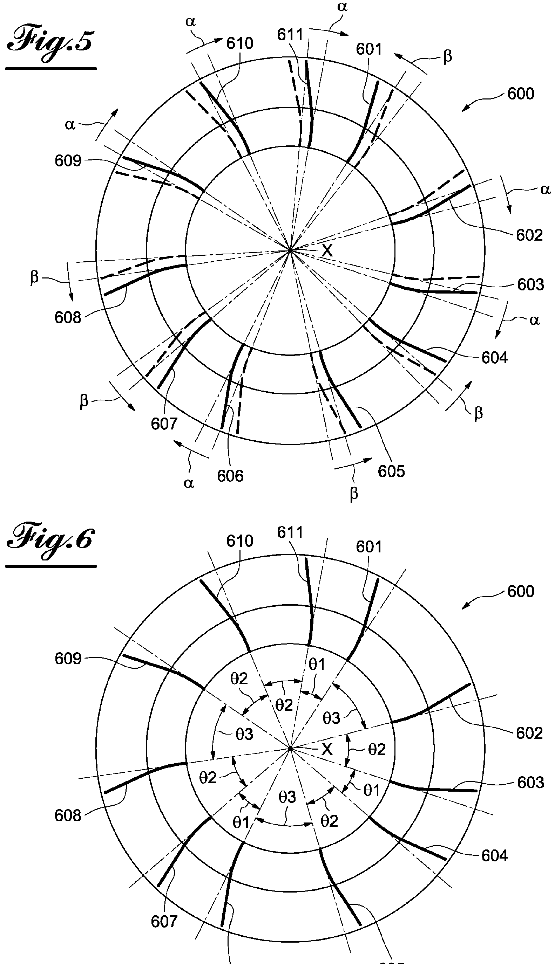

Selon l'invention, et en référence à la figure 5, la disposition des ailettes 601 à 611 d'un ventilateur 600 est obtenue à partir de la répartition équidistante en appliquant un décalage à la position angulaire de chacune des ailettes, le décalage étant défini, individuellement pour chaque ailette, de la manière qui va être présentée ci-après.

Par rapport à la position de l'ailette dans le cas d'une répartition équidistante, l'ailette est positionnée avec un décalage angulaire qui prend l'une ou l'autre de deux valeurs. Ces deux valeurs α et β sont définies et fixées préalablement pour le ventilateur.

Selon l'invention, la différence des deux valeurs de décalage α et β soit supérieure à un minimum, qui pour le ventilateur à onze ailettes, est indiqué être 4°.

Ainsi, si le minimum choisi est de 4°, les deux valeurs de décalage peuvent être de -2° et +2° ou -1° et +3°, ou encore -3° et +1°.

Si le minimum est choisi égal à 5°, les deux valeurs peuvent être -2,5° et +2,5°, ou -2° et +3°, ou encore -3° et +2°. D'autres combinaisons sont possibles.

Selon l'invention, la séquence des décalages successifs, pour les ailettes du ventilateur, est définie à partir d'une séquence binaire initiale selon une répartition définie par une méthode PRBS dite additive, pour *pseudo random binary sequence* (terminologie anglaise pour séquence binaire pseudo-aléatoire). On rappelle que dans une séquence binaire pseudo-aléatoire la génération des nouveaux éléments de la séquence est faite à partir de la séquence binaire initiale, et à l'aide d'une combinaison logique (utilisant un opérateur *ou exclusif*) de deux éléments binaires antérieurs de la séquence, ici deux éléments binaires successifs de la séquence.

La séquence binaire pseudo-aléatoire est générée à partir d'une valeur de longueur de génération de 2ⁿ éléments binaires choisie en fonction du nombre d'ailettes, Nₐᵢₗₑₜₜₑₛ.

Ainsi, en fonction du nombre d'ailettes, Nₐᵢₗₑₜₜₑₛ, les séquences binaires pseudo-aléatoires sont les suivantes :
- Pour un nombre d'ailettes de 0 à 8, la séquence binaire pseudo-aléatoire générée est constituée de 2³ éléments binaires et la répartition à utiliser est : abbabaab.
- Pour un nombre d'ailettes de 9 à 16, la séquence binaire pseudo-aléatoire générée est constituée de 2⁴ éléments binaires et la répartition à utiliser est : abbbabbaababaaaa.
- Pour un nombre d'ailettes de 17 à 32, la séquence binaire pseudo-aléatoire générée est constituée de 2³ éléments binaires et la répartition à utiliser est : abbbbabbbaabbababaaaaabbbbabbbaa.

Avec a un des deux états binaires et b l'autre état binaire. Par exemple a= 1 et b=0.

Plus précisément, pour trouver la séquence binaire pseudo-aléatoire, pour une longueur de génération de 2³ éléments binaires, noté PRBS 2³ :
- On part de la séquence initiale '100' et ensuite l'on fait la méthode du « OU exclusif » sur des paquets de 2 chiffres successifs, le résultat du « OU exclusif » complétant la séquence initiale, le premier paquet étant les deux premiers chiffres binaires de la séquence initiale, donc ici '10', chaque paquet suivant étant les deux chiffres binaires suivants le premier des deux chiffres binaires successifs du précédent paquet :
   - Donc le 4^{ème} chiffre est le résultat du Ou exclusif sur le 1^{er} paquet de 2 chiffres : OUexclusif ('10')='1' et la séquence devient alors '1001',
   - Donc le 5^{ème} chiffre est le résultat du Ou exclusif sur le 2^{ème} paquet de 2 chiffres : OUexclusif ('00') ='0', et la séquence devient alors '10010',
   - Donc le 6^{ème} chiffre est le résultat du Ou exclusif sur le 3^{ème} paquet de 2 chiffres : OUexclusif ('01') ='1', et la séquence devient alors '100101',
   - Donc le 7^{ème} chiffre est le résultat du Ou exclusif sur le 4^{ème} paquet de 2 chiffres : OUexclusif('10')='1', et la séquence devient alors "1001011',
   - Donc le 8^{ème} chiffre est le résultat du Ou exclusif sur le 5^{ème} paquet de 2 chiffres : OUexclusif ('01')='1', ce qui donne la séquence finale suivante : '10010111'

De la même façon, pour trouver la distribution de la séquence binaire pseudo-aléatoire, pour une longueur de génération de 2⁴ éléments binaires, noté PRBS 2⁴, on part de la combinaison '1000' et ensuite on fait la méthode du « OU exclusif » sur chaque paquet de 2 chiffres :
- Donc le 5^{ème} chiffre est le résultat du Ou exclusif sur le 1^{er} paquet de 2 chiffres : OUexclusif ('10')='1'
- Donc le 6^{ème} chiffre est le résultat du Ou exclusif sur le 2^{ème} paquet de 2 chiffres : OUexclusif ('00')='0'
   Donc le 7^{ème} chiffre est le résultat du Ou exclusif sur le 3^{ème} paquet de 2 chiffres : OUexclusif ('00')='0'
- Donc le 8^{ème} chiffre est le résultat du Ou exclusif sur le 4^{ème} paquet de 2 chiffres : OUexclusif ('01')='1'
- Donc le 9^{ème} chiffre est le résultat du Ou exclusif sur le 5^{ème} paquet de 2 chiffres : OUexclusif ('10')='1'
- Donc le 10^{ème} chiffre est le résultat du Ou exclusif sur le 6^{ème} paquet de 2 chiffres : OUexclusif ('00')='0'
- Donc le 11^{ème} chiffre est le résultat du Ou exclusif sur le 7^{ème} paquet de 2 chiffres : OUexclusif ('01')='1'
- Donc le 12^{ème} chiffre est le résultat du Ou exclusif sur le 8^{ème} paquet de 2 chiffres : OUexclusif ('11')='0'
- Donc le 13^{ème} chiffre est le résultat du Ou exclusif sur le 9^{ème} paquet de 2 chiffres : OUexclusif ('10')='1'
- Donc le 14^{ème} chiffre est le résultat du Ou exclusif sur le 10^{ème} paquet de 2 chiffres : OUexclusif ('01')='1'
- Donc le 15^{ème} chiffre est le résultat du Ou exclusif sur le 11^{ème} paquet de 2 chiffres : OUexclusif ('10')='1'
- Donc le 16^{ème} chiffre est le résultat du Ou exclusif sur le 12^{ème} paquet de 2 chiffres : OUexclusif ('01')='1'
   Ce qui donne la suite suivante : '1000100110101111'

La démarche est la même pour trouver la séquence binaire pseudo-aléatoire, pour une longueur de génération de 2⁵ éléments binaires, noté PRBS 2⁵, à partir de la séquence initiale '10000'.

Ainsi, pour un ventilateur à onze ailettes, il est avantageux de choisir une longueur de génération de la séquence binaire pseudo-aléatoire égale à 2⁴.

Pour un ventilateur à onze ailettes, la séquence retenue à partir de la séquence binaire pseudo-aléatoire égale à 2⁴ éléments est la suivante : 10001001101. On a retenu dans ce cas de la séquence binaire pseudo-aléatoire de 2⁴ éléments, c'est-à-dire '1000100110101111', les Nₐᵢₗₑₜₜₑₛ premiers éléments successifs.

Ainsi, en utilisant cette séquence dans le mode de réalisation où l'écart entre les deux décalages est de 4°, et si les deux décalages sont respectivement α=-2° et β=+2°, les ailettes du ventilateur à onze ailettes sont réparties autour de l'axe avec des décalages, par rapport à la disposition qu'elles auraient si elles étaient disposées de manière équidistante, qui suivent la séquence -2°, +2°, +2°, +2°, -2°, +2°, +2°, -2°, -2°, +2°, -2°. Cela apparaît en figure 6. Le ventilateur 600 à onze ailettes comprend des ailettes 601 à 611 disposées selon l'invention. On constate que les écarts entre deux ailettes consécutives peuvent prendre trois valeurs : θ₁, θ₂ (égal à θ) et θ₃.

L'utilisation d'une telle séquence binaire pseudo-aléatoire pour les décalages angulaires α et β des ailettes successives permet de réduire le bruit acoustique des sirènes aérauliques du ventilateur et, par conséquent, de modifier la coloration du bruit de l'alternateur ou de l'alterno-démarreur. Notamment, grâce à l'invention, on diminue fortement l'intensité de l'émission acoustique correspondant à l'harmonique engendrée par la répétition des ailettes quand celles-ci sont réparties de manière régulière autour de l'axe. Il s'agit là d'une application de la méthode additive de séquence binaire pseudo-aléatoire à la répétition des ailettes.

Dans le cas d'un ventilateur à onze ailettes, comme revendiqué, cette harmonique est notée H11, et la séquence binaire pseudo-aléatoire appliquée au décalage angulaire des ailettes, issue de la séquence binaire pseudo-aléatoire de longueur de génération de 2⁴ éléments, permet de supprimer l'harmonique H11 avec un effet maximal.

Pour un ventilateur à 2³ = 8 ailettes ou à moins de 8 ailettes, une séquence PRBS 2³ est plus efficace, alors que pour un ventilateur à plus de 2⁴ = 16 ailettes, une séquence PRBS 2⁵ est plus efficace. D'une manière générale, on choisit une séquence binaire pseudo-aléatoire de longueur de génération de 2ⁿ éléments binaires, avec n≥1, tel que 2⁽ⁿ⁻¹⁾ < Nₐᵢₗₑₜₜₑₛ ≤ 2ⁿ.

Connaissant n, la séquence binaire initiale est alors constituée de n éléments binaires. Dans le cas décrit plus haut la séquence initiale est constituée d'un premier élément binaire l'état binaire, a, ici a=1, suivi de n-1 éléments binaires à l'autre état binaire, b, ici b=0.

En effet, pour un ventilateur ayant un nombre d'ailettes donné, il est, selon l'invention, recommandé de choisir une séquence binaire pseudo-aléatoire dont la longueur de génération est choisie pour minimiser la répétition de motifs sur une séquence dont la longueur est égale au nombre d'ailettes. Une longueur de génération trop faible ou trop élevée mènera, par rapport à la longueur de génération optimale, à la répétition de motifs dans la séquence des ailettes.

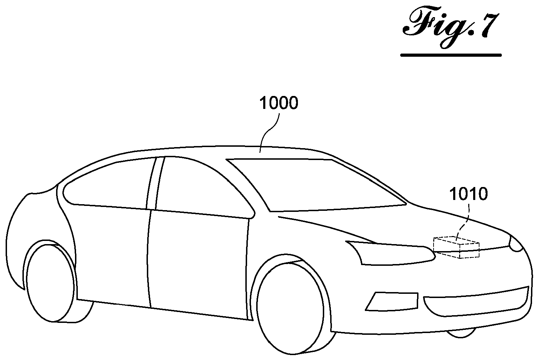

De manière générale, grâce à l'invention, on étale l'énergie acoustique sur l'ensemble du spectre des fréquences sonores, et on évite l'émergence d'une sirène correspondant à une harmonique donnée de la fréquence de rotation du rotor. L'invention s'applique aux alternateurs, aux alterno-démarreurs et autres machines tournantes électriques, équipés d'un ventilateur de refroidissement. Elle est particulièrement intéressante pour l'équipement des véhicules automobiles car elle permet de faire en sorte que le bruit du rotor ne se distingue pas du bruit d'ensemble du moteur, et notamment les véhicules automobiles à propulsion hybride telle l'automobile 1000 représentée en figure 7, équipée d'un alterno-démarreur 1010.

## Revendications

1. Ventilateur (140, 145 ; 240, 600) pour machine électrique tournante de véhicule automobile, comprenant une succession d'ailettes (601-611) réparties autour d'un axe de rotation (X), chacune desdites ailettes (601-611) étant disposée angulairement autour dudit axe (X), par rapport à une position qui serait la sienne si toutes les ailettes étaient disposées de manière équidistante, avec un décalage angulaire respectif, le décalage angulaire étant pris, pour les ailettes successives (601-611), suivant une séquence binaire pseudo-aléatoire, parmi deux valeurs (α ; β) prédéfinies pour le ventilateur (600), **caractérisé en ce que** la séquence binaire pseudo-aléatoire est générée à partir d'une séquence binaire initiale et d'une combinaison logique utilisant un opérateur « OU exclusif » de paquet de deux éléments binaires successifs de ladite séquence, la différence entre les deux valeurs de décalage angulaire (α ; β) étant d'au moins 4° et les ailettes (601-611) étant au nombre de 11.

2. Ventilateur selon la revendication 1, **caractérisé en ce que** le premier paquet de deux éléments binaires successifs sont les deux premiers éléments binaires successifs de la séquence initiale, et chaque paquet suivant étant les deux éléments binaires successifs suivants le premier des deux éléments binaires successifs du précédent paquet.

3. Ventilateur selon la revendication 1 ou la revendication 2, **caractérisé en ce que** la séquence binaire pseudo-aléatoire a une longueur de génération adaptée, en fonction du nombre d'ailettes du ventilateur, pour minimiser les répétitions de motifs dans la succession d'écarts angulaires entre ailettes.

4. Ventilateur selon la revendication 3, **caractérisé en ce que** la longueur de génération en fonction du nombre d'ailettes, Nₐᵢₗₑₜₜₑₛ, est de 2ⁿ éléments binaires, avec n≥1, tel que 2⁽ⁿ¹⁾ < Nₐᵢₗₑₜₜₑₛ ≤ 2ⁿ .

5. Ventilateur selon la revendication 4, **caractérisé en ce que** la séquence binaire initiale est constituée de n éléments binaires.

6. Ventilateur selon la revendication 5, **caractérisé en ce que** la séquence binaire initiale est constituée d'un premier élément binaire à un état binaire, a, suivi de n-1 éléments binaires à l'autre état binaire, b.

7. Machine électrique tournante (100; 200; 1010) pour véhicule automobile, comprenant un ventilateur (600) selon l'une des revendications 1 à 6.

8. Machine électrique tournante (100 ; 200 ; 1010) selon la revendication 7, étant un alternateur ou un alterno-démarreur.

9. Véhicule automobile (1000), comprenant une machine électrique tournante (100 ; 200 ; 1010) selon la revendication 8 ou la revendication 9.

10. Méthode de fabrication d'un ventilateur pour machine électrique tournante pour véhicule automobile, comprenant le positionnement d'une succession d'ailettes (601-611) réparties autour d'un axe de rotation, en disposant chacune desdites ailettes angulairement autour dudit axe (X), par rapport à une position qui serait la sienne si toutes les ailettes étaient disposées de manière équidistante, avec un décalage angulaire respectif, le décalage angulaire étant pris, pour les ailettes successives (601-611), parmi deux valeurs prédéfinies (α ; β) pour le ventilateur suivant une séquence binaire pseudo-aléatoire, **caractérisé en ce que** la séquence binaire pseudo-aléatoire est générée à partir d'une séquence binaire initiale et d'une combinaison logique utilisant un opérateur « OU exclusif » de paquet de deux éléments binaires successifs de ladite séquence, la différence entre les deux valeurs de décalage angulaire (α ; β) étant d'au moins 4° et les ailettes (601-611) étant au nombre de 11.

## Patentansprüche

1. Ventilator (140, 145 ; 240, 600) für eine rotierende elektrische Maschine eines Kraftfahrzeugs, umfassend eine Folge von um eine Drehachse (X) verteilten Rippen (601-611), wobei jede der Rippen (601-611) winkelförmig um die Achse (X) in Bezug auf eine Position angeordnet, die ihre eigene wäre, wenn alle Rippen äquidistant angeordnet wären, mit einem entsprechenden Winkelversatz, wobei der Winkelversatz für die aufeinanderfolgenden Rippen (601-611) genommen wird, wie folgt: eine binäre Pseudozufallsfolge unter zwei vordefinierten Werten (α ; β) für das Beatmungsgerät (600), **dadurch gekennzeichnet, dass** die binäre Pseudozufallsfolge aus einer anfänglichen Binärfolge und einer logischen Kombination unter Verwendung eines "exklusiven ODER" erzeugt wird Operator Paket aus zwei aufeinanderfolgenden binären Elementen der Folge, wobei die Differenz zwischen den beiden Winkelversatzwerten (α ; β) mindestens 4° beträgt und die Anzahl der Rippen (601-611) 11 beträgt.

2. Ventilator nach Anspruch 1, **dadurch gekennzeichnet, dass** das erste Paket von zwei aufeinanderfolgenden binären Elementen die ersten beiden aufeinanderfolgenden binären Elemente der Anfangssequenz sind und jedes folgende Paket die zwei aufeinanderfolgenden binären Elemente ist, die dem ersten der beiden aufeinanderfolgenden binären Elemente folgen aus dem vorherigen Paket.

3. Ventilator nach Anspruch 1 oder Anspruch 2, **dadurch gekennzeichnet, dass** die pseudozufällige binäre Folge eine geeignete Generationslänge hat, abhängig von der Anzahl der Rippen des Fächers, um die Wiederholungen von Mustern in der Abfolge von Winkelunterschieden zwischen zu minimieren Flossen.

4. Ventilator nach Anspruch 3, **dadurch gekennzeichnet, daß** die Erzeugung Länge in Abhängigkeit von der Anzahl der Rippen, N Rippen, betragen 2 ⁿ binäre Elemente, mit n ≥ 1, derart, dass 2 ⁽ⁿ⁻¹⁾ <N _{Rippen} ≤ 2 ⁿ .

5. Ventilator nach Anspruch 4, **dadurch gekennzeichnet, dass** die anfängliche binäre Folge aus n binären Elementen besteht.

6. Ventilator nach Anspruch 5, **dadurch gekennzeichnet, dass** die anfängliche binäre Folge aus einem ersten binären Element in einem binären Zustand a, gefolgt von n-1 binären Elementen in dem anderen binären Zustand b besteht.

7. Rotierende elektrische Maschine (100 ; 200 ; 1010) für ein Kraftfahrzeug, umfassend einen Lüfter (600) nach einem der Ansprüche 1 bis 6.

8. Rotierende elektrische Maschine (100 ; 200 ; 1010) nach Anspruch 7, die ein Wechselstromgenerator oder ein Wechselstromgenerator-Starter ist.

9. Kraftfahrzeug (1000), umfassend eine rotierende elektrische Maschine (100 ; 200 ; 1010) nach Anspruch 8 oder Anspruch 9.

10. Verfahren zur Herstellung eines Lüfters für eine rotierende elektrische Maschine für ein Kraftfahrzeug, umfassend das Anordnen einer Folge von Rippen (601-611), die um eine Drehachse herum verteilt sind, durch Anordnen jeder der Rippen winklig um die Achse (X) in Bezug auf eine Position, die ihre eigene wäre, wenn alle Flossen äquidistant mit einem jeweiligen Winkelversatz angeordnet wären, wobei der Winkelversatz für die aufeinanderfolgenden Flossen (601-611) aus zwei vordefinierten Werten (α ; β) für genommen wird wobei der Fächer einer pseudozufälligen binären Folge folgt, **dadurch gekennzeichnet, dass** die pseudozufällige binäre Folge aus einer anfänglichen binären Folge und einer logischen Kombination unter Verwendung eines « exklusiven ODER » Operators eines Pakets von zwei aufeinanderfolgenden binären Elementen der Folge erzeugt wird, die Die Differenz zwischen den beiden Winkelversatzwerten (α ; β) beträgt mindestens 4° und die Anzahl der Rippen (601-611) beträgt 11.

## Claims

1. Fan (140, 145 ; 240, 600) for a rotary electrical machine of a motor vehicle, comprising a succession of fins (601-611) distributed around an axis of rotation (X), each of said fins (601-611) being arranged angularly around said axis (X), with respect to a position which would be its own if all the fins were arranged equidistantly, with a respective angular offset, the angular offset being taken, for the successive fins (601-611), following a pseudo-random binary sequence, among two predefined values (α ; β) for the ventilator (600), **characterized in that** the pseudo-random binary sequence is generated from an initial binary sequence and a logical combination using an "OR exclusive" operator Packet of two successive binary elements of said sequence, the difference between the two angular offset values (α ; β) being at least 4° and the fins (601-611) being 11 in number.

2. Fan according to claim 1, **characterized in that** the first packet of two successive binary elements are the first two successive binary elements of the initial sequence, and each following packet being the two successive binary elements following the first of the two successive binary elements from the previous package.

3. Fan according to claim 1 or claim 2, **characterized in that** the pseudo-random binary sequence has a suitable generation length, depending on the number of fins of the fan, to minimize the repetitions of patterns in the succession of angular differences between fins.

4. Fan according to claim 3, **characterized in that** the generation length as a function of the number of fins, N _{fins}, is 2 ⁿ binary elements, with n ≥ 1, such that 2 ⁽ⁿ⁻¹⁾ <N _{fins} ≤ 2 ⁿ .

5. Fan according to claim 4, **characterized in that** the initial binary sequence consists of n binary elements.

6. Fan according to claim 5, **characterized in that** the initial binary sequence consists of a first binary element in a binary state, a, followed by n-1 binary elements in the other binary state, b.

7. Rotating electric machine (100 ; 200 ; 1010) for a motor vehicle, comprising a fan (600) according to one of claims 1 to 6.

8. Rotating electric machine (100 ; 200 ; 1010) according to claim 7, being an alternator or an alternator-starter.

9. Motor vehicle (1000), comprising a rotating electric machine (100 ; 200 ; 1010) according to claim 8 or claim 9.

10. Method of manufacturing a fan for a rotary electrical machine for a motor vehicle, comprising positioning a succession of fins (601-611) distributed around an axis of rotation, by arranging each of said fins angularly around said axis (X), with respect to a position which would be its own if all the fins were arranged equidistantly, with a respective angular offset, the angular offset being taken, for the successive fins (601-611), from among two predefined values (α ; β) for the fan following a pseudo-random binary sequence, **characterized in that** the pseudo-random binary sequence is generated from an initial binary sequence and a logical combination using an "OR exclusive" operator of a packet of two successive binary elements of said sequence, the difference between the two angular offset values (α ; β) being at least 4° and the fins (601-611) being 11 in number.
